# EUROPÄISCHE PATENTSCHRIFT

(11) **EP 1 839 242 B1**
(45) Veröffentlichungstag und Bekanntmachung des Hinweises auf die Patenterteilung: **27.06.2012**
(21) Anmeldenummer: 05849242.2
(22) Anmeldetag: 02.12.2005
(51) Int. Cl.: G06Q 10/00

(54) **VERFAHREN ZUM AUSLÖSEN EINER KOSTENBUCHUNG**
METHOD FOR INITIATING A COST ENTRY
PROCEDE POUR LANCER UN ENREGISTREMENT DE COUT

(30) Priorität: 21.12.2004 DE 102004062784
(43) Veröffentlichungstag der Anmeldung: 03.10.2007
(73) Patentinhaber: Hiflex Software GesmbH, 1090 Wien (AT)
(72) Erfinder: REICHHART, Thomas, 52447 Aldenhoven (DE)
(74) Vertreter: Bauer, Dirk
(86) Internationale Anmeldenummer: PCT/EP2005/012895
(87) Internationale Veröffentlichungsnummer: WO 2006/066709

(56) Entgegenhaltungen:
- HARVEY J: "JDF: Where to Begin", 20020101, [Online] 1 January 2002 (2002-01-01), pages 1-18, XP007916248, Retrieved from the Internet: URL:http://www.media4theworld.com/Papers/J DF_where_to_begin.pdf>
- CIP4 ORGANIZATION: "JDF Specification Release 1.1", JDF SPECIFICATION RELEASE 1.1,, no. chapter 1-5, 30 April 2002 (2002-04-30), pages 1-172, XP007916247,

## Beschreibung

Die Erfindung betrifft ein Verfahren zum Auslösen einer Kostenbuchung im Rahmen eines Auftrags, der von einem Management Information System erteilt und auf einem ausführenden System ausgeführt wird, wobei das ausführende System auf den Auftrag bezogene Statusmeldungen im Job Definition Format an das Management Information System übermittelt und wobei eingehende Statusmeldungen bei dem Management Information System abgelegt werden.

Das Job Definition Format "JDF" (und das Job Messaging Format "JMF" als Untermenge von JDF) sind allgemein bekannte, vom Konsortium "International Cooperation for the Integration of Processes in Prepress, Press and Postpress" ("CIP4-Konsortium", www.cip4.org) entwickelte und gepflegte Datenformate. Der Entwicklung von JDF liegt die Zielvorstellung zugrunde, im Rahmen einer vernetzten grafischen Produktion für alle Produktionsmöglichkeiten und Eventualitäten flexibel und ohne Einschränkungen die Kommunikation zwischen Druckerei, Designer, Werbeagentur, Auftraggeber von Drucksachen und Unterlieferanten von Auftragnehmern zu vereinheitlichen.

JDF basiert auf der Extensible Markup Language "XML", einer gleichfalls allgemein bekannten, vom World Wide Web Consortium ("W3C", www.w3.org) entwickelten Metasprache zum Definieren von Dokumenttypen und soll nach der Intention des CIP4-Konsortiums nicht nur in allen Produktionsbereichen einer vernetzten Druckerei, insbesondere in Vertrieb, Kalkulation und Auftragsbearbeitung, Produktionsplanung und - steuerung, in der eigentlichen Produktion in Vorstufe, Druck, Druckweiterverarbeitung und Versand, in den Querschnittsbereichen Material- und Lagerwirtschaft, Finanz- und Lohnbuchhaltung, Controlling, Kostenrechnung und Qualitätssicherung als einheitliches Datenformat zur Beschreibung von Prozessen und Produkten dienen.

Durch vertikale Integration von Daten einerseits des Produktionsprozesses und andererseits der kaufmännischen Bereiche soll JDF in einer verständlichen und durchgängigen Datenstruktur eine hohe Transparenz aller Produktionsabläufe, eine standardisierte Dokumentation der relevanten Soll- und Istdaten und eine durchgängige Produktionssteuerung ermöglichen. Insbesondere soll ein Auftrag in JDF nur noch ein einziges Mal in einer Form beschrieben werden, die auch in der externen Kommunikation sowohl mit Endkunden als auch mit Unterauftragnehmern und deren ausführenden Systemen in der Mensch-Maschine- und Maschine-Maschine-Kommunikation über Sprach- und Plattformgrenzen hinweg alle Prozessteilnehmer verstehen.

Nach der Philosophie des CIP4-Konsortiums und der darauf basierenden Konzeption von JDF werden Statusinformationen zu den im Rahmen eines Auftrags abgearbeiteten Vorgängen in dem "audit pool"-Struktur einer JDF-Datei abgelegt und gesammelt und nach Abschluss des Auftrags zur Nachkalkulation ausgewertet.

In allgemein bekannten Verfahren der eingangs genannten Art werden Kostenbuchungen ausgelöst, sobald das Bedienpersonal mittels einer Betriebsdatenerfassung auf Laufzetteln oder in einem BDE-Terminal den Abschluss eines Vorgangs im Rahmen der Bearbeitung des Auftrags anzeigt.

Im Artikel "JDF: Where to Begin" von James E. Harvey, wird das Parsen von JDF-Daten und deren Ablage in einer Datenbank offenbart.

### Aufgabe

Der Erfindung liegt die Aufgabe zugrunde, ein anderes Verfahren zur Kostenbuchung nach Abschluss eines einzelnen Vorgangs vorzuschlagen.

### Lösung

Ausgehend von den bekannten Verfahren wird nach der Erfindung vorgeschlagen, dass die bei dem Management Information System eingehenden Statusmeldungen mittels eines Parsers kategorisiert abgelegt werden, und dass eine Kostenbuchung ausgelöst wird, wenn eine Statusmeldung als kostenrelevant abgelegt wird.

Auf Seiten des Management Information System kann zur Implementierung des erfindungsgemäßen Verfahrens beispielsweise ein einfacher Proxyserver JMF-Statusmeldungen, die über das "HyperText Transfer Protocol" (HTTP) - oder über ein anderes Kommunikationsschema, mittels dessen Dateien von einem Computer auf einen anderen übertragbar sind - entgegennehmen und ablegen.

Die Verwendung von JMF-Statusmeldungen zur Kostenbuchung widerspricht der Philosopie des CIP4-Konsortiums, wie sie in der "JDF Interoperability Conformance. Specification" (MIS ICS 1.0, draft vom 26.10.2004) niedergelegt ist. Nach dieser ICS wird aus Sicherheitsüberlegungen empfohlen, allein "audit pool" Elemente der JDF-Datei zur Kostenbuchung, alle Informationen aus JMF-Statusmeldungen jedoch ausschließlich zur Fortschrittskontrolle der Vorgänge und zur Auslastungsstatistik der ausführenden Systeme zu verwenden. Lediglich auf Grundlage der JMF-Knoten "DeviceInfo" und "JobPhase" wird eine Kostenbuchung zugelassen, jedoch unter dem ausdrücklichen Vorbehalt, dass ein die Anforderungen dieser ICS erfüllendes ausführendes System die Vollständigkeit der Information dieser Felder nicht garantieren muss.

Die Auslösung der Kostenbuchung kann im Rahmen des erfindungsgemäßen Verfahrens von der Entgegennahme und Ablage der Statusmeldungen (im Beispiel durch den Proxyserver) programmtechnisch vollständig entkoppelt werden. Für die Entgegennahme der Statusmeldungen wie für das Auslösen einer Kostenbuchung muss lediglich der Ort der Ablage verfügbar und die Form der Ablage als Schnittstellendefinition bekannt sein. Durch die Ermöglichung einer modularen Betriebsweise zeichnet sich das erfindungsgemäße Verfahren einerseits durch eine hohe Flexibilität, andererseits durch eine hohe Zuverlässigkeit aus.

Werden die eingehenden Statusmeldungen durch das für die Entgegennahme und Ablage der Statusmeldungen zuständige Modul an einem ersten Ablageort - im Sinne eines Cache - zwischengespeichert, so kann auch die Kategorisierung der eingehenden Statusmeldungen wiederum als separates Modul ausgeführt werden. Bei einem Ausfall des Moduls für die Kategorisierung ist dann die Entgegennahme und Ablage der Statusmeldungen nicht beeinträchtigt. Auch die Kostenbuchung bleibt funktionstüchtig (wenn auch gegebenen Falls auf einem veralteten Stand).

In einer bevorzugten Ausführungsform des erfindungsgemäßen Verfahrens wird jede als kostenrelevant kategorisierte Statusmeldung in einem von einem Buchungsmodul überwachten Bereich abgelegt, und löst das Buchungsmodul dann eine Kostenbuchung aus, wenn eine Statusmeldung in dem überwachten Bereich abgelegt wurde.

Beispielsweise können die eingehenden Statusmeldungen als JMF-Dateien in einem oder mehreren "Hotfoldern" abgelegt werden, deren Inhalt im Rahmen des Management Information System zum Auslösen einer Kostenbuchung von einer als Buchungsmodul im Hintergrund laufenden Anwendung, einem so genannten "disk and execution monitor" (in Workstation-Betriebssystemen zumeist als "Daemon", unter PC-Betriebssystemen als "Dienst" bezeichnet) auf Änderungen überwacht wird. Die Ablage einer als kostenrelevant kategorisierten Statusmeldung in dem überwachten "Hotfolder" kann dann eine Kostenbuchung triggern. Die Ablage der Statusmeldungen in einem Dateisystem stellt eine besonders einfache Implementation einer Datenbankstruktur dar. Alternativ ist grundsätzlich auch die Verwendung anderer Formen von Datenbanken möglich.

In einer weiteren vorteilhaften Ausführung des erfindungsgemäßen Verfahrens wird nach Abschluss der Kostenbuchung die Statusmeldung aus dem überwachten Bereich in einen Ablagebereich verschoben. Durch diese Maßnahme können die bereits durchgeführten Buchungen nach einer Fehlfunktion des Buchungsmoduls einfach von noch durchzuführenden Buchungen unterschieden werden. Darüber hinaus kann die Datenbasis der bereits durchgeführten Buchungen bei Bedarf aus den in den Ablagebereich verschobenen Statusmeldungen einfach kontrolliert oder sogar vollständig neu aufgebaut werden.

### Ausführungsbeispiel

Die Erfindung wird nachfolgend anhand eines Ausführungsbeispiels erläutert. Es zeigen
- Fig. 1: eine Liste von Feldern und zugeordneten Verzeichnisnamen,
- Fig. 2: eine Liste von logisch verknüpften Feldinhalten und zugeordneten betriebswirtschaftlichen Parametern.

In einer vernetzten Druckerei werden Teilvorgänge von Aufträgen auf verschiedenen ausführenden Systemen bearbeitet; die Steuerung und Überwachung der Auftragsbearbeitung obliegt einem Management Information System. Die betriebswirtschaftliche Kalkulation der Aufträge wird in einem separaten Kostenmodul durchgeführt.

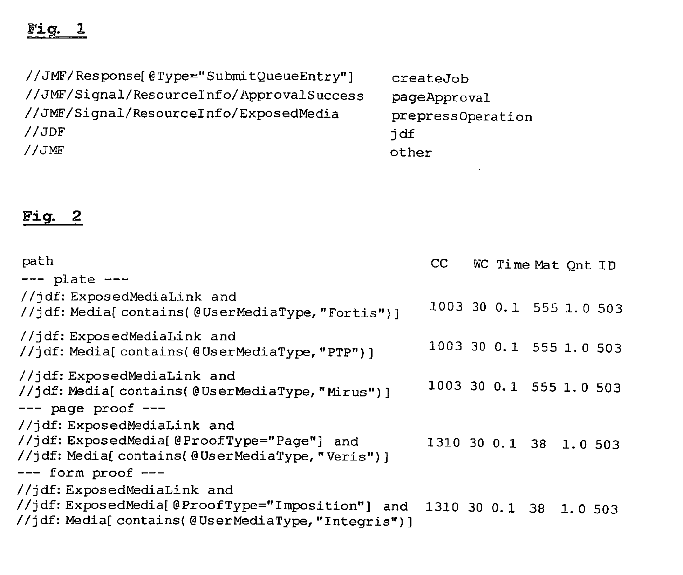

Die an das Management Information System angeschlossenen ausführenden Systeme senden JMF-Statusmeldungen über HTTP an einen Proxyserver, der diese in einem speziellen Verzeichnisbaum auf einem Dateiserver ablegt. In den Proxyserver ist ein Modul integriert, das die eingehenden Statusmeldungen nach Teilaufträgen und prozessen kategorisiert und die Ablage in den in derselben Tabelle spezifizierten Verzeichnissen in dem Verzeichnisbaum initiiert. Die von dem Proxyserver zur Kategorisierung verwendeten XML-Felder der Statusmeldungen sind gemäß der Tabelle in Figur 1 in einer Textdatei spezifiziert.

In einem zweiten Modul werden die gemäß der Tabelle in Figur 2 in der Textdatei spezifizierten XML-Feldinhalte der Statusmeldungen ausgewertet. Ist in einer Statusmeldung eine der in der mit "path" gekennzeichneten Spalte gemäß Figur 2 definierten logischen Bedingungen erfüllt, so wird die Statusmeldung als kostenrelevant kategorisiert und die betreffende Datei in einem Hotfolder "costs" im Verzeichnisbaum des betreffenden Auftrags auf einem zentralen Server abgelegt.

Beim Start des separaten Kostenmoduls werden die Hotfolder "costs" für die bearbeiteten Aufträge ausgelesen. Liegt in einem der Hotfolder eine Datei, so wird diese wiederum mittels eines Parsers geprüft, ob eine der in der mit "path" gekennzeichneten Spalte gemäß Figur 2 definierten logischen Bedingungen erfüllt ist. Ist dies der Fall, so löst das Kostenmodul eine Kostenbuchung mit den in derselben Zeile der Textdatei definierten betriebswirtschaftlichen Parametern (CC: "Kostenstelle", WC: "Arbeitsvorgang", Time: "zu buchende Zeit", Mat: "Materialnummer", Qnt: "Menge" und ID: Personalnummer) aus und verschiebt die Datei anschließend in ein Ablageverzeichnis "saved".

## Patentansprüche

1. Verfahren zum Auslösen einer Kostenbuchung im Rahmen eines Auftrags, der von einem Management Information System erteilt und auf einem ausführenden System ausgeführt wird, wobei das ausführende System auf den Auftrag bezogene statusmeldungen als JMF-Datei an das Management Information System übermittelt und wobei die eingehenden JMF-Dateien bei dem Management Information System abgelegt werden, ***dadurch gekennzeichnet, dass*** die bei dem Management Information System eingehenden JMF-Dateien mittels eines Parsers kategorisiert abgegt werden, und dass eine Kostenbuchung ausgelöst wird, wenn eine JMF-Datei als kostenrelevant abgelegt wird, wobei jede als kostenrelevant kategorisierte JMF-Datei in einem von einem Buchungsmodul überwachten Bereich abgelet wird, und dass das Buchungsmodul eine Kostenbuchung auslöst, wenn eine JMF-Datei in dem überwachten Bereich abgelegt wurde.

2. Verfahren nach dem vorgenannten Anspruch ***dadurch gekennzeichnet, dass*** nach Abschluss der Kostenbuchung die JMF-Datei aus dem überwachten Bereich in einen Ablagebereich verschoben wird.

## Claims

1. Method of triggering a cost booking as part of an order issued by a management information system and carried out on a executing system, whereby the executing system, sends order-relate status messages in as JMF files to the management information system and whereby the incoming JMF files are stored at the management information system, ***characterised in that*** the JMF files received at the management information system are saved after categorisation by a parser, and that a cost booking is triggered if a JMF file is saved as being cost-relevant, whereby every JMF file categorised as cost-relevant is stored in an area monitored by a booking module and the booking module triggers a cost booking if a JMF file has been saved in the monitored area.

2. Method in accordance with the preceding claim ***characterised in that*** on completion of the cost booking the JMF file is moved from the monitored area into a storage area.

## Revendications

1. Procédé pour déclencher une comptabilisation de coût dans le cadre d'une commande, qui est délivrée par un système d'information de gestion et est exécutée sur un système exécutant, le système exécutant transmettant des messages d'état spécifiques à la commande sous forme de fichier JMF au système d'information de gestion et les fichiers JMF entrant étant déposés sur le système d'information de gestion, **caractérisé en ce que** les fichiers JMF entrants sur le système d'information de gestion sont déposés de façon catégorisée au moyen d'un programme d'analyse syntaxique, et **en ce qu'**une comptabilisation de coût est déclenchée lorsqu'un fichier JMF est déposé comme étant important au niveau des coûts, chaque fichier JMF catégorisé comme important au niveau des coûts étant déposé dans une zone contrôlée par un module de comptabilisation, et **en ce que** le module de comptabilisation déclenche une comptabilisation de coût, lorsqu'un fichier JMF a été déposé dans la zone contrôlée.

2. Procédé selon la revendication susmentionnée, **caractérisé en ce que**, après l'achèvement de la comptabilisation de coût, le fichier JMF est déplacé hors de la zone contrôlée dans une zone de dépôt.
